# EUROPÄISCHE PATENTSCHRIFT

(11) **EP 0 618 128 B1**
(45) Veröffentlichungstag und Bekanntmachung des Hinweises auf die Patenterteilung: **27.08.1997**
(21) Anmeldenummer: 94810102.7
(22) Anmeldetag: 21.02.1994
(51) Int. Cl.: B62D 21/10, B62D 29/04, B62D 29/00, B62D 31/00

(54) **Leichtbau-Strassenfahrzeug mit tragender Struktur**
Lightweight road vehicle with load-bearing structure
Véhicule routier à construction légère avec structure portante

(30) Priorität: 27.02.1993 CH 583/93
(43) Veröffentlichungstag der Anmeldung: 05.10.1994
(73) Patentinhaber: ESORO AG, 8152 Glattbrugg (CH)
(72) Erfinder: Jaggi, Diego, CH-8700 Küsnacht (CH)

(56) Entgegenhaltungen:
- EP-A- 0 554 889
- EP-A- 0 574 281
- WO-A-92/20563
- DE-A- 2 644 666
- FR-A- 1 060 250
- FR-A- 2 391 893
- FR-A- 2 684 606
- FR-A- 2 684 950
- GB-A- 237 605
- GB-A- 677 456
- US-A- 1 556 121
- US-A- 2 814 524
- US-A- 4 148 505

## Beschreibung

Die Erfindung betrifft ein Leichtbau-Strassenfahrzeug mit einer tragenden Struktur und einem Energiespeicher, insbesondere ein Elektromobil mit Traktionsbatterien, mit nebeneinanderliegendem Fahrer- und Beifahrersitz. Derartige Fahrzeuge sind vor allem als sogenannte elektrifizierte Microcars bekannt geworden, welche jedoch sehr einfach aufgebaut sind und nur schwache Fahrleistungen aufweisen. Damit können sie vor allem ausserorts im Verkehr nicht mithalten und bilden daher oft ein Verkehrshindernis. Ihr einfacher und relativ schwacher Aufbau ergibt eine geringe passive Sicherheit und ihre schweren Batterien in schlechter Gewichtsverteilung führen überdies zu entsprechend schlechten Fahreigenschaften. Aktive und passive Sicherheit dieser bekannten Fahrzeuge sind daher vor allem bei höheren Geschwindigkeiten noch ungenügend.

Aus der US 2 814 524 ist ein Sportfahrzeug mit tragender Struktur bekannt, welche ein tiefliegendes Querrohr und zwei seitliche Längsprofile enthält. Diese Struktur eignet sich jedoch weder für Elektroantrieb noch könnte damit die nachfolgende Aufgabe gelöst werden.

Es ist Aufgabe der vorliegenden Erfindung, ein Leichtbau-Fahrzeug mit einer tragenden Struktur zu schaffen, welches höhere Fahrleistungen und volles Mithalten im Strassenverkehr erlaubt, und welches ganz wesentliche Verbesserungen bezüglich Insassensicherheit und insbesondere Schutz gegen Seitenaufprall aufweist. Zudem sollen auch wesentlich bessere Fahreigenschaften erreicht werden, welche erst sicheres Fahren bei höheren Fahrgeschwindigkeiten erlauben.

Diese Aufgabe wird erfindungsgemäss gelöst durch ein Leichtbau-Fahrzeug gemäss Anspruch 1. Der relativ grosse geschlossene Querschnitt des Querrohrs unter den Vordersitzen in Verbindung mit den Seitenprofilen ergibt eine leichte und besonders im empfindlichen zentralen Bereich des Fahrzeugs hochfeste und steife Struktur. Der relativ grosse Innenraum des Querrohrs schafft tiefliegend und im Zentrum des Fahrzeugs einen idealen Platz zur Aufnahme schwerer Komponenten, insbesondere des Energiespeichers. Es wird daher erfindungsgemäss auch mindestens ein Teil des Energiespeichers im Querrohr untergebracht und damit im Falle eines Zusammenstosses auch sicher abgestützt, so dass er nicht in den Passagierraum des Fahrzeugs eindringen kann.

Die abhängigen Ansprüche betreffen vorteilhafte Weiterbildungen der Erfindung mit besonders steifen und festen tragenden Strukturen in leistungsfähigen Leichtbaufahrzeugen und mit weiteren Verbesserungen bezüglich aktiver und passiver Sicherheit. Die Erfindung wird im folgenden anhand von Beispielen und Figuren näher erläutert. Es zeigt:
- Fig. 1: eine erfindungsgemässe Struktur eines Leichtbau-Fahrzeugs mit Querrohr im Querschnitt;
- Fig. 2: eine Struktur mit Querrohr und Längsprofilen im Grundriss;
- Fig. 3: ein Beispiel eines gerundeten Querrohrs;
- Fig. 4: eine Sandwichdoppelwand;
- Fig. 5: perspektivisch ein weiteres Beispiel einer Struktur mit Querrohr;
- Fig. 6: ein Leichtbaufahrzeug mit seitlichen Strukturringen, Frontwand, Heckwand und mittigem Querrohr;
- Fig. 7: eine perspektivische Ansicht einer Leichtbaufahrzeug-Struktur;
- Fig. 8: ein Querrohr mit Seitenwänden und integrierten Verstärkungssträngen;
- Fig. 9, 10: ein Beispiel mit an das Querrohr anschliessenden doppelschaligen Türen und unteren Längsprofilen in zwei Ansichten.

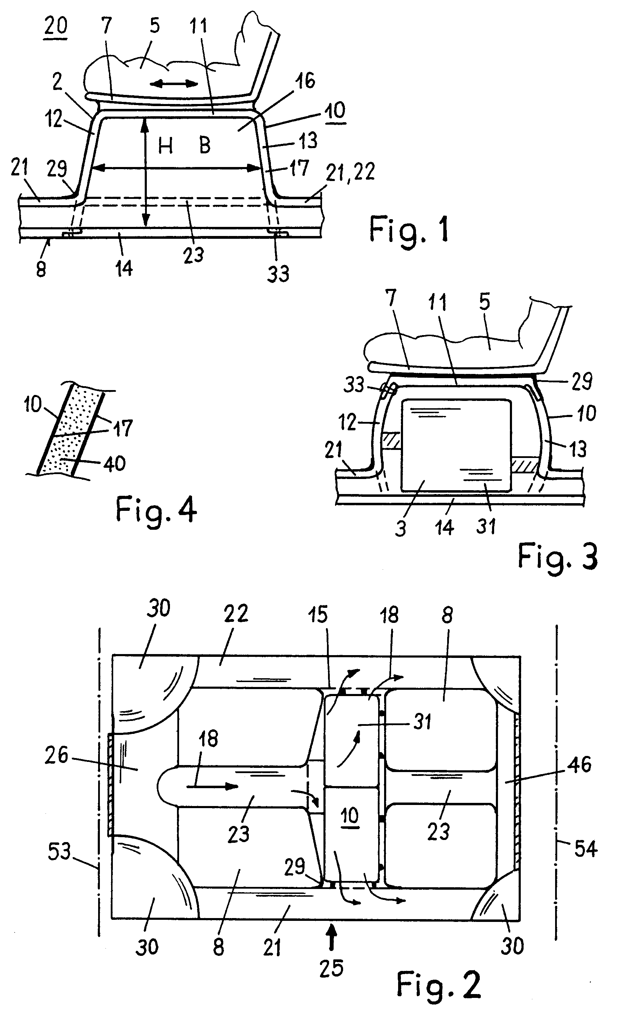

Fig. 1 und 2 zeigen ein unter Fahrer- und Beifahrersitz 5, 6 angeordnetes, sich im wesentlichen über die Breite des Leichtbaufahrzeugs erstreckendes Querrohr 10 mit einer Deckplatte 11, einer Vorderwand 12, einer Hinterwand 13 und einer Bodenplatte 14, welche zusammen einen geschlossenen Querschnitt bilden. Das Querrohr 10 ist mindestens mit zwei aussenliegenden seitlichen Längsprofilen 21, 22, vorzugsweise ebenfalls in Form von Rohrprofilen mit geschossenem Querschnitt, verbunden.

Das Beispiel in Fig. 2 weist zusätzlich ein mittiges Längsprofilrohr 23 auf. Das Querrohr 10 wird durch die Längsprofile 21, 22, 23 nach vorne und auch nach hinten abgestützt. Krafteinleitungen 29, z.B. in Form von verstärkten, gerundeten Übergängen, sorgen für die Übertragung von einwirkenden Kräften auf alle verbundenen Elemente der Tragstruktur 2. Das Querrohr 10 ist so unter den Vordersitzen, d.h. Fahrer- und Beifahrersitz 5, 6 angeordnet, dass ein relativ grosser Querschnitt gebildet wird mit einer Höhe H von vorzugsweise mindestens 15 cm (z.B. 15 - 25 cm) und einer Breite B von vorzugsweise mindestens 25 cm (z.B. 25 - 40 cm). Dadurch werden gleichzeitig mehrere ganz wesentliche Vorteile erreicht.
- Der grosse Querschnitt des Querrohrs ergibt einmal eine erhebliche Verstärkung und Versteifung der Tragstruktur 2 vor allem im mittleren Bereich zwischen Vorder- und Hinterrädern 53, 54, der bei bisherigen Strassenfahrzeugen einen besonders schwachen Bereich darstellt (Pfeil 25, Fig. 2, 6, 7).
- Dann wird durch das Querrohr im Zentrum des Fahrzeuginnenraums, wo bisher kein freier Platz zur Verfügung stand ein Stauraum geschaffen. Hier können somit schwere Fahrzeugkomponenten untergebracht werden, insbesondere schwere Energiespeicher wie Traktionsbatterien. Diese erhalten damit eine optimale Lage, tief und zentral gelegen, was sich in entsprechend besseren Fahreigenschaften auswirkt. Batterien bisheriger Elektrofahrzeuge müssen oft im Heck oder in der Front, zum Teil sogar über dem Motor liegend, untergebracht werden. Dies ergibt eine starke Front- bzw. Hecklastigkeit mit entsprechend schlechtem Fahrverhalten und gefährlichen Reaktionen bei raschem Richtungswechsel. Die höherliegenden Batterien ergeben zudem eine sehr ungünstige Erhöhung des Fahrzeugschwerpunkts.
- Im Innern des Querrohrs untergebrachte Energiespeicher werden von der Vorderwand 12 bzw. der Hinterwand 13 nach vorn und nach hinten abgestützt. Damit wird verhindert, dass die Batterien bei einem Aufprall in den Passagierraum geschleudert werden, was bei bisherigen Leichtmobilen ein gefährliches Problem darstellte.
- Mit den zusammenhängenden Teilen Deckplatte 11, Vorderwand 12 und Hinterwand 13 kann zudem eine hermetische Abdichtung des Querrohrinnenraums 16 gegen den Passagierraum 20 erreicht werden. Bei einem Defekt des Energiespeichers auftretende, allfällige schädliche, aggressive oder explosive Substanzen können dadurch von den Passagieren ferngehalten werden.
- Mittels Abstützung auf die Seitenwände 15 des Querrohrs kann eine Batterie 31 auch selber noch zur Querverstärkung der Struktur eingesetzt werden.
- Und als weiterer Vorteil der erfindungsgemässen Struktur kann das Querrohr zur thermischen Konditionierung zum optimalen Betrieb eines Energiespeichers bzw. einer Traktionsbatterie auf einfache Art über die Längskanäle (21, 22, 23) belüftet werden (18, Fig. 2).

Der geschlossene Querschnitt des Querrohrs 10 kann z.B. rechteckig, viereckig, trapezförmig oder auch gerundet ausgebildet sein und das Querrohr kann sich von der Mitte aus nach beiden Seiten hin verjüngen. Wesentlich ist dabei der gute Übergang zur Krafteinleitung auf angrenzende Teile wie Längsprofile, Boden usw. (Krafteinleitungen 29 in Fig. 1 - 3, 9, 10).

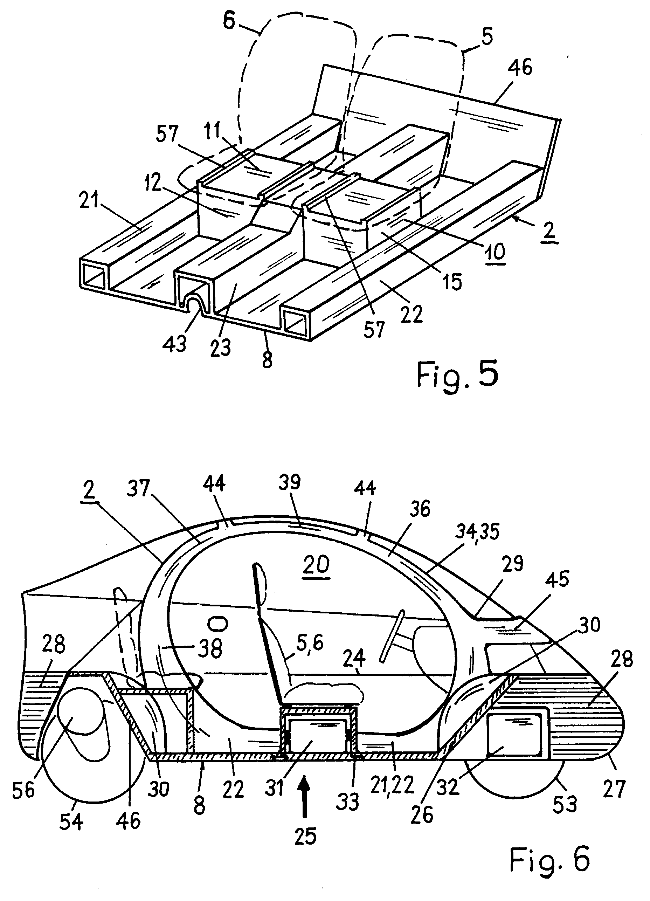

Fig. 3 zeigt als weiteres Beispiel ein Querrohr mit gerundeten Wänden 12 und 13 sowie mit einer fest in die Deckplatte 11 integrierten Sitzschale 7. Durch feste Verbindung einer Sitzschale 7 mit der Deckplatte 11 wird eine zusätzliche Verstärkung und Versteifung des Querrohrs erreicht. Dabei kann die Sitzschale fest oder auch verstellbar (z.B. über Verstellschienen 57 in Fig. 5) ausgebildet sein. Zum einfachen Auswechseln der Batterie kann die Bodenplatte 14 des Querrohrs abnehmbar ausgeführt sein, wie in Fig. 1 dargestellt, oder es kann die Deckplatte 11 nach Fig. 3 abnehmbar sein. Dabei wird durch geeignete Ausbildung der Plattenränder, z.B. überlappend, ein optimaler Kraftschluss zum Fahrzeugboden 8, bzw. zu den Wänden 12, 13, hergestellt (29, 33)

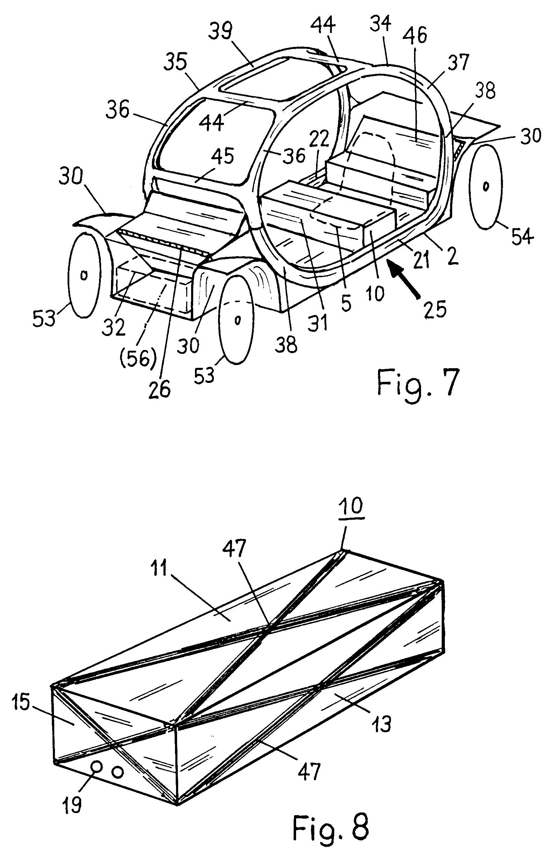

Leichte und steife Querrohre mit besonders hoher Beulfestigkeit können mit relativ dicken bzw. doppelschaligen oder sandwichartigen Querrohrwänden aufgebaut werden. Fig. 4 zeigt eine solche Sandwichwand 17 mit zwei Deckschichten z.B. aus faserverstärkten Verbundwerkstoffen und dazwischenliegendem leichtem Stützkern 40, z.B. in Form von Schaumstoff oder Waben. Fig. 8 zeigt ein besonders leichtes und steifes Querrohr 10, welches mit Belüftungslöchern 19 versehene Seitenwände 15 aufweist. Das Querrohr ist mit integrierten fachwerkartigen Verstärkungen 47 ausgerüstet, z.B. in Form von auf Faserverbundwände auflaminierte Kohlebändern.

Fig. 6 und 7 zeigen ein Leichtbaufahrzeug mit tragender Struktur. Die Bodengruppe mit Boden 8, Querrohr 10 und seitlichen Längsprofilen 21, 22 ist mit vorderen und hinteren Radkästen 30 sowie mit einer schrägen Frontwand 26 und einer Heckquerwand 46 verbunden. Diese wird ergänzt durch zwei seitliche Strukturringe 34, 35, welche vordere und hintere Scheibenrahmen 36, 37, einen Türrahmen 38 und einen seitlichen Dachrahmen 39 enthalten und welche in die Längsprofile 21, 22 übergehen. Die Strukturringe 34, 35 sind auch im oberen Bereich durch Dachquerprofile 44 und ein Frontscheibenquerprofil 45 miteinander verbunden. Diese Strukturelemente mit krafteinleitenden Übergängen 29 bilden zusammen eine leichte, hochfeste und sehr steife tragende Raumstruktur 2, welche auch eine besonders hohe Seitenfestigkeit und entsprechend einen wesentlich erhöhten Insassenschutz aufweist. Die ganze Front des Leichtbaufahrzeugs ist als Knautschzone ausgebildet. Die Fahrzeugnase 27 ist mit einem stoss- bzw. energieabsorbierendem Material 28 gefüllt, welches einerseits direkt auf die tragende Struktur 2 und anderseits auf einen Teil 32 des Energiespeichers bzw. seiner Umhüllung abstützt. Dieser Teil 32 ist am Fahrzeugboden 8 und direkt vor der schrägen Frontwand 26 angeordnet. Im Falle eines frontalen Stosses wird zum einen die energieabsorbierende Nase zusammengestaucht und zum andern die Batterie 32 durch die Frontwand 26 schräg nach unten weggedrückt, bzw. der Insassenraum des Fahrzeugs darüber weggeschoben. Dadurch wird ein grösstmöglicher Deformationsbereich erzielt ohne Zusammenstauchen der tragenden Struktur mit den Seitenringen 34, 35. In analoger Weise kann auch eine Heckquerwand 46 nach hinten ansteigend ausgebildet sein mit einer dahinter liegenden Antriebseinheit 56, welche bei einem Aufprall von hinten schräg unter die Heckquerwand 46 weggedrückt würde.

Aus Fig. 6 ist auch die günstige, ausgewogene Gewichtsverteilung der tiefliegenden schweren Komponenten, d.h. des Batterieteils 31 in der Mitte (25), des Batterieteils 32 an der Vorderachse und des Heckantriebs 56 bei der Hinterachse ersichtlich. Als Beispiel kann ein solches 2 + 2-sitziges Leicht-Elektrofahrzeug mit erfindungsgemässer tragender Struktur und mit sicheren Fahreigenschaften bis 120 km/h Spitzengeschwindigkeit realisiert werden. Das Leergewicht beträgt nur 550 kg, wovon 60 kg auf die tragende Struktur, je 100 kg auf die Batterien 31 und 32 und 60 kg auf das Antriebsgewicht mit Achsen entfallen. Für eine Frontantriebsausführung können die Plätze von Speicherteil 32 und Antrieb 56 ausgetauscht werden. Es kann z.B. auch ein Hybrid-Frontantrieb 56, bestehend aus einem Elektro- und einem Verbrennungsmotor vorgesehen sein.

Erfindungsgemässe Leichtbaufahrzeuge mit tragender, hochstabiler Struktur können auch andere Energiespeicher und Antriebsarten aufweisen, wobei schwerere Komponenten vorzugsweise im Querrohr 10 untergebracht sind. So sind vor allem auch Hybridfahrzeuge mit kombinierten Antrieben (im speziellen thermischen und elektrischen) denkbar. Neben den elektrischen Antrieben können Brennstoffzellen und thermische Antriebe wie Gasmotoren, Sterlingmotoren und kleine Gasturbinen eingesetzt sein und als Energiespeicher neben Elektrochemischen Einheiten auch Wasserstoff-Metall-Hydridspeicher, Gasspeicher, Alkoholspeicher usw. Anwendung finden. Fig. 5 zeigt ein durchgehendes zusätzliches, nach unten offenes Halbrohr 43 im Längsprofil 23 zur Aufnahme einer Auspuffleitung von vorn nach hinten.

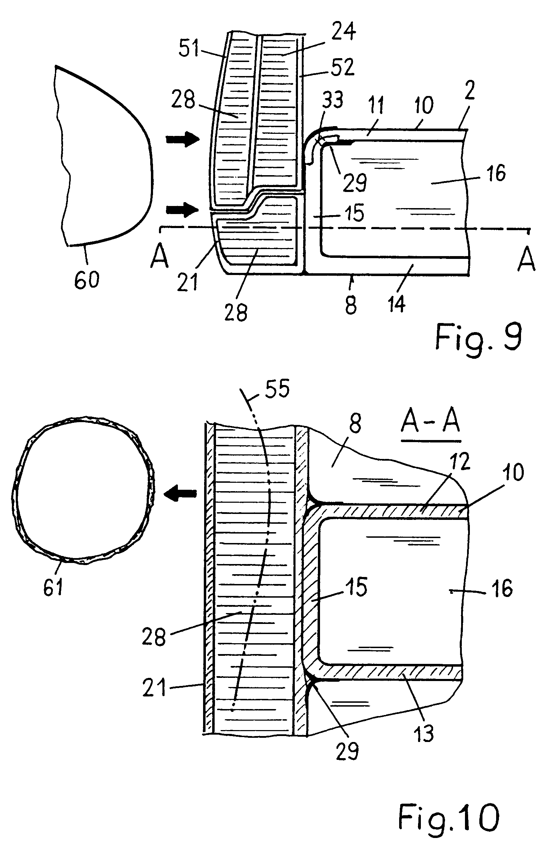

Die Fig. 9 und 10 illustrieren in zwei Ansichten die besonders hohe Seitenfestigkeit der erfindungsgemässen Struktur: einmal durch ihre Bauweise selber und zum andern bezogen auf das relativ geringe Eigengewicht des Leichtbaumobils. Seitlich unmittelbar an das Querrohr 10 anliegend bzw. einstückig damit verbunden sind das Bodenlängsprofil 21 und darauf liegend eine doppelwandige Türe 24 mit äusserer und innerer Schale 51, 52. Damit können die Seitenprofile und die Türen als Knautschzone wirken und gleichzeitig auch seitliche Stosskräfte auf die steife Querrohrstruktur 10 überleiten. Zur weiteren Verstärkung können die Türen 24 und die Längsprofile 21, 22 zusätzlich noch mit energieabsorbierendem Material 28 gefüllt sein. Als solches eignen sich z.B. in Stossrichtung orientierte Röhrchenplatten und Schaumstoffe. Fig. 9 illustriert den Aufprall eines seitlich auftreffenden Fahrzeugs 60. Dessen Front bzw. Stossstangenhöhe entspricht üblicherweise im wesentlichen der Lage des Querrohrs, so dass dieses ein Eindrücken des Fahrgastraums wirksam verhindern kann. Im Horizontalschnitt A-A von Fig. 10 ist der besonders gefährliche mittige Seitenaufprall auf einen Baum 61 illustriert. Dank mittiger, zentraler Anordnung des Querrohrs 10 zwischen Vorder- und Hinterrädern wird auch dieser Stoss weitgehend durch das Querrohr aufgefangen und auf die ganze Tragstruktur 2 abgestützt, so dass diese nicht einknickt. Die Deformation einer eingedrückten Aussenschale von Bodenprofil 21 und Türe 24 ist mit der Linie 55 dargestellt. Dies illustriert die abgedämpfte Kraftübertragung und Kraftverteilung auf das Querrohr 10. Bei bisherigen Strassenfahrzeugen mit bezogen auf ihr hohes Eigengewicht relativ geringer Seitenfestigkeit und ohne erfindungsgemässe hochfeste Querrohrstruktur wird bei seitlichem Aufprall auf einen schlanken Pfeiler oder Baum der Fahrzeuginnenraum unweigerlich tief eingedrückt - mit schwersten Folgen für die Insassen auf den Vordersitzen.

Als Werkstoffe für die tragende Struktur 2 eignen sich besonders Faserverbundwerkstoffe, d.h. mit technischen Endlosfasern aus Glas, Kohle oder Aramid verstärkte Kunststoffe, beispielsweise Epoxide oder Polyester als Duroplaste und Thermoplaste. Auch Leichtmetalle, speziell Aluminiumlegierungen oder Kombinationen von Faserverbundwerkstoffen und Leichtmetallen können Verwendung finden.

## Patentansprüche

1. Leichtbau-Strassenfahrzeug mit einem Energiespeicher (3), insbesondere Elektromobil mit Traktionsbatterien, mit nebeneinanderliegendem Fahrer- und Beifahrersitz und mit einer tragenden Struktur (2), welche ein unter Fahrer- und Beifahrersitz (5, 6) angeordnetes Querrohr (10) und zwei mit dem Querrohr verbundene längs verlaufende endseitige Profile aufweist, dadurch gekennzeichnet, dass das Querrohr einen geschlossenen Querschnitt mit Bodenplatte (14), Deckplatte (11), Vorderwand (12) und Hinterwand (13) als Rohrwände aufweist, wobei mindestens drei der vier Rohrwände (11, 12, 13, 14) zusammenhängend ausgebildet sind und wobei das Querrohr mit mindestens zwei längs verlaufenden endseitigen Abstützprofilen (21, 22) verbunden und nach vorne abgestützt ist, wobei mindestens ein Teil des Energiespeichers (31) im Querrohr (10) angeordnet ist und wobei die Bodenplatte (14) oder die Deckplatte (11) des Querrohrs abnehmbar ausgeführt ist.

2. Fahrzeug nach Anspruch 1, dadurch gekennzeichnet, dass mindestens ein Teil des Querrohr-Querschnitts oberhalb einer durch die Achsen der Räder (53, 54) definierten Ebene liegt.

3. Fahrzeug nach Anspruch 1 oder 2, dadurch gekennzeichnet, dass die Verbindungen zwischen Querrohr (10) und rohrförmigen Längsprofilen (21, 22) Krafteinleitungen (29) aufweisen.

4. Fahrzeug nach einem der vorangehenden Ansprüche, dadurch gekennzeichnet, dass der Fahrzeuginnenraum (20) durch Deckplatte (11), Vorderwand (12) und Hinterwand (13) hermetisch gegen das Innere (16) des Querrohrs abgeschlossen ist.

5. Fahrzeug nach einem der vorangehenden Ansprüche, dadurch gekennzeichnet, dass die Höhe (H) des Querrohrs (10) mindestens 15 cm und dessen Breite (B) mindestens 25 cm beträgt.

6. Fahrzeug nach einem der vorangehenden Ansprüche, dadurch gekennzeichnet, dass das Querrohr (10) mindestens teilweise doppelwandig (17), z.B. in Sandwichbauweise, ausgeführt ist.

7. Fahrzeug nach einem der vorangehenden Ansprüche, dadurch gekennzeichnet, dass das Querrohr mittig (25) zwischen Vorderachse (53) und Hinterachse (54) angeordnet ist.

8. Fahrzeug nach einem der vorangehenden Ansprüche, dadurch gekennzeichnet, dass das Querrohr Seitenwände (15) und fachwerkartige Verstärkungen (47) aufweist.

9. Fahrzeug nach einem der vorangehenden Ansprüche, dadurch gekennzeichnet, dass ein Hybridantrieb vorgesehen ist mit einem elektrischen Antrieb und einem thermischen Antrieb je mit zugeordneten Energiespeichern.

10. Fahrzeug nach einem der vorangehenden Ansprüche, dadurch gekennzeichnet, dass doppelschalige Türen (24) und untere Längsprofile (21, 22) seitlich unmittelbar an das Querrohr (10) anschliessen und dass die Türen und die Längsprofile energieabsorbierendes Material (28) enthalten.

11. Fahrzeug nach einem der vorangehenden Ansprüche, dadurch gekennzeichnet, dass das Querrohr zusätzlich durch ein mittiges Längsprofilrohr (23) nach vorn abgestützt ist.

12. Fahrzeug nach einem der vorangehenden Ansprüche, dadurch gekennzeichnet, dass eine Belüftung (18) durch die Längsprofile (21, 22, 23) und das Querrohr hindurch vorgesehen ist.

13. Fahrzeug nach einem der vorangehenden Ansprüche, gekennzeichnet durch eine schräg nach vorn ansteigende Frontwand (26), welche über die Radkästen (30) und die Längsprofile (21, 22, 23) mit dem Querrohr verbunden ist.

14. Fahrzeug nach Anspruch 13, gekennzeichnet durch eine als Knautschzone ausgebildete Fahrzeugnase (27) vor der Frontwand, welche mindestens teilweise mit energieabsorbierendem Material (28) gefüllt ist.

15. Fahrzeug nach Anspruch 13, dadurch gekennzeichnet, dass ein Teil des Energiespeichers (32) am Fahrzeugboden (8) und vor der Frontwand (26) oder hinter der Hinterwand (46) angeordnet ist.

16. Fahrzeug nach Anspruch 13, dadurch gekennzeichnet, dass die tragende Struktur (2) zwei seitliche Strukturringe (34, 35), gebildet aus Längsprofilen (21, 22), Scheibenrahmen (36, 37), Türrahmen (38) und Dachrahmen (39) aufweist, welche mit dem Querrohr und der Frontwand verbunden sind.

17. Fahrzeug nach Anspruch 16, dadurch gekennzeichnet, dass als weitere Strukturelemente mindestens ein Dachquerprofil (44), ein Frontscheibenprofil (45), eine Heckquerwand (46) und ein Fahrzeugboden (8) mit den seitlichen Strukturringen (34, 35) verbunden sind.

18. Fahrzeug nach einem der vorangehenden Ansprüche, dadurch gekennzeichnet, dass die tragende Struktur (2) mindestens teilweise aus Faserverbund-Werkstoffen besteht.

19. Fahrzeug nach einem der Ansprüche 1 bis 17, dadurch gekennzeichnet, dass die tragende Struktur aus Leichtmetall besteht.

## Claims

1. Lightweight road vehicle with an energy accumulator (3), in particular electric car with traction batteries, with adjacent driver's and passenger seats and with a supporting structure (2) which has a cross tube (10) arranged beneath the driver's and passenger seats (5, 6), and two end-sided support sections running in the longitudinal direction, which are connected with the cross tube, characterised in that the cross tube has an enclosed cross-section with floor plate (14), top plate (11), front wall (12) and rear wall (13) as tube walls, at least three of four tube walls (11, 12, 13, 14) being interconnected and the cross tube being connected with and supported at the front by at least two end-sided support sections (21, 22) running in the longitudinal direction, wherein at least one section of the energy accumulator (31) is arranged in the cross tube (10) and wherein the floor plate (14) or the top plate (11) of the cross tube is designed to be detachable.

2. Vehicle according to claim 1 characterised in that at least part of the cross-section of the cross tube is extending above a plane which is defined by the axles of the wheels (53, 54).

3. Vehicle according to claim 1 or 2 characterised in that the interconnections beween the cross tube (10) and tube-shaped longitudinal sections (21, 22) have force transmitting junctions (29).

4. Vehicle according to one of the preceding claims characterised in that the interior space of the vehicle (20) is hermetically sealed by top plate (11), front wall (12) and rear wall (13) from the inside (16) of the cross tube.

5. Vehicle according to one of the preceding claims characterised in that the height (H) of the cross tube (10) is at least 15 cm and its width (W) is at least 25 cm.

6. Vehicle according to one of the preceding claims characterised in that the cross tube (10) is at least partially double-skinned (17), for example, is of a sandwich construction.

7. Vehicle according to one of the preceding claims characterised in that the cross tube is arranged centrally (25) between front axle (53) and rear axle (54).

8. Vehicle according to one of the preceding claims characterised in that the cross tube has side walls (15) and latticework-like reinforcements (47).

9. Vehicle according to one of the preceding claims characterised by a hybrid drive including an electric motor and a thermal engine, each with a corresponding energy accumulator.

10. Vehicle according to one of the preceding claims characterised in that double-skinned doors (24) and lower longitudinal sections (21, 22) connect laterally immediately on the cross tube (10) and in that the doors and the longitudinal sections contain energy-absorbing material (28).

11. Vehicle according to one of the preceding claims characterised in that the cross tube is also supported at the front by a central longitudinal special section tube (23).

12. Vehicle according to one of the preceding claims characterised in that ventilation (18) is provided through the longitudinal sections (21, 22, 23) and the cross tube.

13. Vehicle according to one of the preceding claims characterised by a front wall (26) that ascends diagonally in front and which is connected with the cross tube by the wheel casings (30) and the longitudinal sections (21, 22, 23).

14. Vehicle according to claim 13 characterised by a vehicle nose (27) designed to form a crush zone in front of the front wall which is at least partially filled with energy-absorbing material (28).

15. Vehicle according to claim 13 characterised in that part of the energy accumulator (32) is arranged on the vehicle floor (8) and in front of the front wall (26) or behind the rear wall (46).

16. Vehicle according to claim 13 characterised in that the supporting structure (2) has two lateral structural rings (34, 35), made of longitudinal sections (21, 22), windscreen frames (36, 37), door frames (38) and roof frame (39) which are connected with the cross tube and the front wall.

17. Vehicle according to claim 16 characterised in that at least one transversal roof section (44), one front windscreen section (45), one rear transversal wall (46) and one vehicle floor (8) in the form of further structural elements are connected with the lateral structural rings (34, 35).

18. Vehicle according to one of the preceding claims characterised in that the supporting structure (2) consists at least partially of fibre composite materials.

19. Vehicle according to one of the claims 1 to 17 characterised in that the supporting structure is made of light metal.

## Revendications

1. Véhicule routier à construction légère avec un accumulateur d'énergie (3) en particulier automobile électrique avec des batteries de traction, comportant un siège du conducteur et un siège du convoyeur disposés l'un à côté de l'autre et avec une structure portante (2), comportant un tube transversal (10) disposé au-dessous du siège du conducteur et du siège du convoyeur (5, 6) et deux profiles s'étendant longitudinalement disposés aux extrémités du tube transversal et raccordés à celui-ci, caractérisé en ce que le tube transversal a une section transversale fermée avec une plaque inférieure (14), une plaque supérieure (11), une paroi avant (12) et une paroi arrière (13) formant les parois du tube, au moins trois de ces quatre parois (11, 12, 13, 14) du tube étant solidaires l'une de l'autre et le tube transversal est connecté à au moins deux profiles de support (21, 22) s'étendant longitudinalement et disposés aux extrémités du tube transversal et supporté vers l'avant, au moins une partie de l'accumulateur d'énergie (31) étant disposée dans le tube transversal (10) et la plaque inférieure (14) ou la plaque supérieure (11) du tube transversal étant formée en vue d'être amovible.

2. Véhicule selon la revendication 1, caractérisé en ce qu'au moins une partie de la section transversale du tube transversal est située au-dessus d'un plan passant par les axes des roues (53, 54).

3. Véhicule selon la revendication 1 or 2, caractérisé en ce que les raccords entre le tube transversal (10) et les profiles longitudinaux tubulaires (21, 22) comportent des moyens d'introduction de force (29).

4. Véhicule selon une des revendications précédentes, caractérisé en ce que l'intérieur du véhicule (20) est hermétiquement fermé par rapport à l'intérieur (16) du tube transversal par la plaque supérieure (11), la paroi avant (12) et la paroi arrière (13).

5. Véhicule selon une des revendications précédentes, caractérisé en ce que la hauteur (H) du tube transversal (10) est au moins 15 cm et sa largeur (B) est au moins 25 cm.

6. Véhicule selon une des revendications précédentes, caractérisé en ce que le tube transversal (10) consiste au moins en partie par une construction à double paroi (17), par exemple en sandwich.

7. Véhicule selon une des revendications précédentes, caractérisé en ce que le tube transversal est disposé centralement (25) entre l'axe avant (53) et l'axe arrière (54).

8. Véhicule selon une des revendications précédentes, caractérisé en ce que le tube transversal a des parois de côté (15) et des renforcements en treillis (47).

9. Véhicule selon une des revendications précédentes, caractérisé en ce qu'un système hybride de propulsion est prévu, comportant un système de propulsion électrique et un système de propulsion thermique, dont chacun est pourvu d'accumulateurs d'énergie.

10. Véhicule selon une des revendications précédentes, caractérisé en ce que des portes (24) à double paroi et des profiles longitudinaux inférieurs (21, 22) sont disposés latéralement à proximité immédiate du tube transversal (10) et en ce que les portes et les profiles longitudinaux contiennent une matière (28) à absorption d'énergie.

11. Véhicule selon une des revendications précédentes, caractérisé en ce que le tube transversal (10) est en outre supporté vers l'avant par un tube profilé longitudinal (23) disposé centralement.

12. Véhicule selon une des revendications précédentes, caractérisé en ce qu'une aération (18) est prévue passant par l'intérieur des profiles longitudinaux (21, 22, 23) et le tube transversal.

13. Véhicule selon une des revendications précédentes, caractérisé par une paroi frontale (26) s'élevant obliquement vers l'avant, qui est reliée au tube transversal par les couvres-roues (30) et les profiles longitudinaux (21, 22, 23).

14. Véhicule selon la revendication 13, caractérisé par un nez (27) de la voiture disposé devant la paroi frontale, formé en tant que zone déformable, et rempli au moins partiellement d'un matériau (28) à absorption d'énergie.

15. Véhicule selon la revendication 13, caractérisé en ce qu'une partie de l'accumulateur d'énergie (32) est disposée sur le fond (8) du véhicule et devant la paroi avant (26) ou derrière la paroi arrière (46).

16. Véhicule selon la revendication 13, caractérisé en ce que la structure portante (2) comporte deux anneaux structuraux latéraux (34, 35) formés par les profiles longitudinaux (21, 22), des cadres de vitre (36, 37), des cadres de porte (38) et des cadres de toit (39), reliés au tube transversal et à la paroi avant.

17. Véhicule selon la revendication 16, caractérisé en ce qu'en tant que d'autres éléments structuraux, au moins un profile transversal (44) du toit, un profile (45) du pare-brise, une paroi transversale arrière (46) et un fond de véhicule (8) sont reliés aux anneaux structuraux latéraux (34, 35).

18. Véhicule selon une des revendications précédentes, caractérisé en ce que la structure portante (2) consiste au moins en partie en matière composite renforcée par des fibres.

19. Véhicule selon une des revendications 1 à 17, caractérisé en ce que la structure portante consiste en métal léger.
